# FASCICULE DE BREVET EUROPEEN

(11) **EP 2 820 655 B1**
(45) Date de publication et mention de la délivrance du brevet: **27.04.2016**
(21) Numéro de dépôt: 13706281.6
(22) Date de dépôt: 28.02.2013
(51) Int. Cl.: G21C 17/00, G21F 7/00, G21F 7/015, G21D 1/00, G01M 3/00, G01F 1/00

(54) **PROCEDE ET DISPOSITIF DE CONTROLE DU CONFINEMENT DYNAMIQUE D'UNE ENCEINTE**
VERFAHREN UND VORRICHTUNG ZUR STEUERUNG DER DYNAMISCHEN BEGRENZUNG EINES GEHÄUSES
METHOD AND DEVICE FOR CONTROLLING THE DYNAMIC CONFINEMENT OF AN ENCLOSURE

(30) Priorité: 29.02.2012 FR 1251872; 08.01.2013 FR 1350149
(43) Date de publication de la demande: 07.01.2015
(73) Titulaire: Commissariat à l'Énergie Atomique et aux Énergies Alternatives, 75015 Paris (FR)
(72) Inventeur: BOIS, Dominique, F-04100 Manosque (FR)
(74) Mandataire: Ipside
(86) Numéro de dépôt international: PCT/EP2013/054064
(87) Numéro de publication internationale: WO 2013/127935

(56) Documents cités:
- FR-A1- 2 587 533
- FR-A1- 2 694 903
- FR-A1- 2 749 430
- FR-A1- 2 958 048

## Description

### Domaine de l'invention

La présente invention a trait à un procédé et un dispositif pour surveiller le confinement dynamique d'une enceinte de confinement en surpression ou en dépression par rapport au milieu extérieur. La présente invention concerne encore une enceinte équipée d'un tel dispositif de contrôle du confinement.

### Arrière-plan technologique

Il est connu dans l'industrie nucléaire de mettre en oeuvre une enceinte de confinement pour procéder à l'assainissement et/ou au démantèlement d'un équipement radioactif d'une installation nucléaire, par exemple en raison de l'obsolescence de cet équipement ou de la mise à l'arrêt de l'installation elle-même.

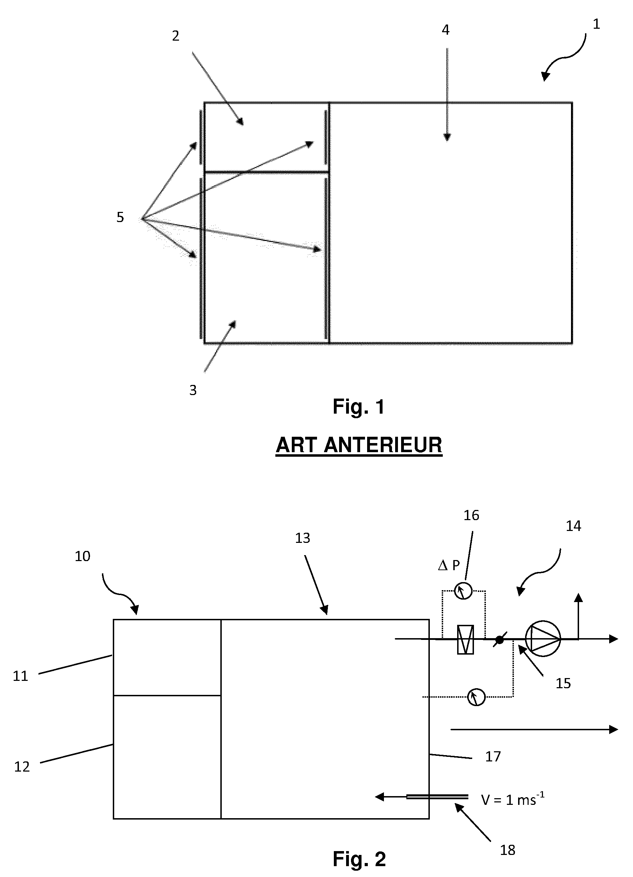

La Figure 1 montre une telle enceinte de confinement 1 de l'état de l'art. Cette enceinte de confinement 1 comprend un ensemble de sas en vinyle comportant un sas entrée et sortie du personnel 2, un sas entrée et sortie de matériel 3 et d'un sas d'intervention 4. C'est dans ce dernier sas 4 qu'un ou plusieurs opérateurs réalisent les opérations d'assainissement et/ou de démantèlement de l'équipement contaminé.

Les deux premiers sas 2, 3 possèdent chacun un accès vers l'extérieur et un accès direct vers le sas d'intervention 4. Ces deux sas 2, 3 ne communiquent pas entre eux de sorte que le premier sas 2 est exclusivement réservé à la circulation du personnel, le deuxième sas 3 étant destiné à la seule évacuation du matériel résultant par exemple du démontage de l'équipement radioactif.

Chaque sas 2-4 est typiquement formé d'une structure métallique et de parois en vinyle souple. Les accès aux sas 2-4 sont constitués de deux nappes en vinyle 5.

Ces parois en vinyle permettent de prévenir la dispersion de substances contaminées dans l'environnement lors de travaux d'assainissement.

Une telle enceinte de confinement 1 destinée aux opérations de démantèlement et/ou d'assainissement est maintenue en dépression par rapport au local d'accueil recevant cette enceinte à l'aide d'un système de ventilation soit autonome, soit raccordée au réseau existant dans le local d'accueil.

La ventilation des sas 2, 3 d'entrée/sortie matériel et personnel se fait par transfert d'air. Seul le sas d'intervention 4 possède une extraction d'air forcée (non représentée).

Lors des opérations d'assainissement et/ou de démantèlement, les débits d'air du sas d'intervention 4 sont extraits par un ventilateur précédé par des filtres à Très Haute Efficacité (filtres THE) capables de piéger les particules entraînées dans l'air ainsi aspirée.

Cette mise en dépression permet donc de confiner et aspirer les poussières contaminées générées par exemple lors de la découpe de l'équipement radioactif.

La sûreté des opérations repose sur la combinaison d'un confinement statique (étanchéité des parois) de l'enceinte de confinement et d'un confinement dynamique (ventilation) qui permet de maintenir cette enceinte en dépression.

L'Autorité de Sûreté Nucléaire (ASN) préconise une dépression d'une telle enceinte de confinement par l'entretien d'une pression différentielle de l'ordre de -40 Pa à -80 Pa avec le local d'accueil.

Cette valeur de dépression est mesurée actuellement à chaque prise de poste de travail, mais il ne peut pas en être déduit avec certitude la conservation de cette valeur durant les opérations d'assainissement et/ou de démantèlement de matériels contaminés.

En effet, cette valeur de dépression peut, par exemple, subitement varier suite à une rupture du confinement statique ou encore en raison d'un colmatage de la filtration entrainant une baisse du débit d'extraction.

La valeur de dépression ne se trouve alors plus dans la fourchette de valeurs préconisées entraînant de fait un arrêt du chantier d'assainissement et/ou de démantèlement jusqu'à ce que la valeur de dépression cible soit obtenue à nouveau.

Or, un tel arrêt de chantier entraine des surcoûts et des reports de délais importants qui sont incompatibles avec les exigences économiques des sociétés intervenantes.

A l'inverse, il existe des enceintes de confinement qui nécessitent une surpression afin de maintenir les poussières à l'extérieur d'une telle enceinte. Le maintien en surpression permet de conserver une atmosphère saine à l'intérieur de l'enceinte, c'est-à-dire dénuée de poussières pénalisantes pour les opérations menées dans cette enceinte.

La sûreté des opérations repose sur la combinaison d'un confinement statique (étanchéité des parois) de l'enceinte de confinement et d'un confinement dynamique (ventilation) qui permet de maintenir cette enceinte en surpression.

Un système mobile d'intervention en ambiance de gaz radioactive est connu du document FR 2 958 048 A1. Le document FR 2 587 533 A1 divulgue un système de contrôle et de surveillance d'une boîte à gants comprenant une alarme.

La présente invention vise à pallier ces divers inconvénients en proposant un procédé et un dispositif pour la surveillance du confinement d'une enceinte en dépression ou en surpression par rapport au milieu extérieur dans lequel cette enceinte est placée, simple dans leur conception et dans leur mode opératoire, garantissant la sûreté de ces opérations.

Un autre objet de la présente invention est un tel procédé et un tel dispositif de surveillance du confinement dynamique d'une enceinte permettant de surveiller en continu la qualité du confinement dynamique de cette enceinte.

Dans la suite de ce document, le terme "confinement" désignera le confinement dynamique. Le terme "enceinte" désignera une enceinte de confinement.

### BREVE DESCRIPTION DE L'INVENTION

A cet effet, l'invention concerne un procédé de surveillance du confinement d'une enceinte, ladite enceinte comportant des parois délimitant un volume intérieur et un milieu extérieur à ladite enceinte, selon lequel on entretient de manière continue une pression différentielle (ΔP) entre le volume intérieur de l'enceinte et ledit milieu extérieur.

Selon l'invention,
- l'enceinte comportant un orifice dans une de ses parois établissant une communication de fluide entre ledit volume intérieur et ledit milieu extérieur, ledit orifice est traversé par un flux gazeux ayant une vitesse (V) au moins égale à une vitesse de référence V_{réf}, sous l'effet de ladite pression différentielle (ΔP), procédé selon lequel on réalise les étapes suivantes:
- mesurer à des intervalles de temps prédéterminés ou en continu la vitesse (V) dudit flux gazeux, et comparer cette mesure de vitesse (V) avec la vitesse de référence V_{référence},
- lorsque la mesure de vitesse (V) est inférieure à la vitesse de référence V_{référence}, émettre au moins un signal d'alarme.

Ce procédé de surveillance comporte donc une étape de suivi dans le temps de la vitesse du flux gazeux entrant dans l'enceinte lorsque celle-ci est en dépression par rapport au milieu extérieur, ou sortant de l'enceinte lorsque celle-ci est en surpression par rapport au milieu extérieur, par la mesure en continu ou à des intervalles de temps prédéterminés, par exemple périodiques, de la vitesse de ce flux gazeux.

Avantageusement, cette mesure de vitesse est réalisée au droit de l'orifice de dimension prédéterminée. La vitesse du flux gazeux entrant dans, ou sortant de, l'enceinte de confinement au travers de l'orifice est directement liée au débit d'extraction, respectivement au débit d'admission, (Q) du système de ventilation de cette enceinte.

A titre d'exemple, le flux gazeux entrant dans, ou sortant de, l'enceinte de confinement est de l'air ou un gaz neutre.

Le procédé de surveillance du confinement d'une enceinte en dépression par rapport au milieu extérieur assure à travers la mesure d'un paramètre simple tout au long des opérations d'assainissement et/ou de démantèlement de garantir la qualité du confinement et éviter ainsi tout risque de contamination à l'extérieur de l'enceinte.

Le procédé de surveillance du confinement d'une enceinte en surpression par rapport au milieu extérieur assure à travers la mesure d'un paramètre simple tout au long des opérations menées dans l'enceinte de garantir la qualité du confinement et éviter ainsi tout risque de contamination vers l'intérieur de l'enceinte.

Ce critère de vitesse est simple à :
- Retenir,
- Obtenir,
- Mesurer,
- Suivre dans le temps.

Cette vitesse de référence :
- Garantie le bon fonctionnement du système de confinement.
- Supprime les contraintes liées à la mise en dépression de l'enceinte diminuant ainsi les coûts d'exploitation des chantiers,
- ou supprime les contraintes liées à la mise en surpression de l'enceinte.

Dans différents modes de réalisation particuliers de ce procédé de surveillance du confinement, chacun ayant ses avantages particuliers et susceptibles de nombreuses combinaisons techniques possibles:
- ladite pression différentielle (ΔP) entre le volume intérieur de l'enceinte et ledit milieu extérieur est établie par au moins un système de ventilation de ladite enceinte.
Ayant déterminé un débit de ventilation de référence (Q_{réf}) de ladite enceinte par ledit au moins un système de ventilation, on réalise les étapes suivantes :
- mesurer le débit de ventilation (Q) de ladite enceinte,
- comparer la mesure de débit de ventilation (Q) ainsi obtenue avec le débit de référence (Q_{réf}) pour déterminer si le débit de ventilation a baissé, et
- éventuellement ajuster le débit de ventilation (Q) pour générer un flux gazeux traversant ledit orifice avec une vitesse au moins égale à ladite vitesse de référence V_{référence}.
On entend par "débit de ventilation", un débit d'extraction ou d'admission d'un flux gazeux tel que de l'air en fonction du mode de fonctionnement en extraction ou en admission dudit au moins un système de ventilation.
Le débit de ventilation (Q) de ladite enceinte est avantageusement mesuré de manière périodique. A titre purement illustratif, on mesure le débit de ventilation à une fréquence d'une mesure par jour, et encore mieux d'une mesure par heure.
A titre d'exemple, le débit de ventilation peut avoir baissé suite au colmatage d'un ou plusieurs étages de filtration de l'enceinte.
Le débit de ventilation de référence (Q_{réf}) est avantageusement enregistré sur une unité de stockage.
Alternativement, le débit de ventilation (Q) de ladite enceinte étant égal ou sensiblement égal au débit de référence (Q_{réf}), on localise la ou les fuites de ladite enceinte et on colmate la ou lesdites fuites. A titre purement illustratif, cette localisation de la ou des fuites entraînant une perte de confinement statique de l'enceinte, peut être réalisée par le balayage d'un gaz traceur dans l'enceinte et la détection au moyen d'un ou plusieurs analyseurs répartis à l'extérieur de l'enceinte du gaz traceur et de sa concentration. De préférence, le gaz ainsi balayé dans l'enceinte est un gaz neutre
Ledit au moins un système de ventilation est choisi dans le groupe comprenant : un système d'extraction d'un flux gazeux, un système d'admission d'un flux gazeux, un système réversible apte à commuter entre un mode extraction de flux gazeux et un mode admission de flux gazeux et des combinaisons de ces éléments.
- ladite pression différentielle (ΔP) entre le volume intérieur de l'enceinte et ledit milieu extérieur est établie par au moins une source d'alimentation en flux gazeux ayant un débit d'admission (Q).
A titre purement illustratif, cette au moins une source d'alimentation en flux gazeux comprend au moins un récipient sous pression d'un flux gazeux. Ce ou ces récipients sous pression peuvent être connectés à un circuit d'alimentation en flux gazeux dans l'enceinte.
Bien entendu, en fonction des besoins, il est possible d'introduire un ou plusieurs flux gazeux différents.
Ayant déterminé un débit d'admission de référence (Q_{réf}) de ladite enceinte par ladite au moins une source d'alimentation en flux gazeux, on réalise les étapes suivantes :
- mesurer le débit d'admission (Q) de ladite enceinte,
- comparer la mesure de débit d'admission (Q) ainsi obtenue avec le débit de référence (Q_{réf}) pour déterminer si le débit d'admission (Q) a baissé, et
- éventuellement ajuster le débit d'admission (Q) pour générer un flux gazeux traversant ledit orifice avec une vitesse au moins égale à ladite vitesse de référence V_{référence}
Alternativement, le débit d'admission (Q) dans ladite enceinte étant égal ou sensiblement égal au débit de référence (Q_{réf}), on localise la ou les fuites de ladite enceinte et on colmate la ou lesdites fuites.
- ladite vitesse de référence V_{référence} est au moins égale à 1 m.s⁻¹.

L'invention concerne également un dispositif pour la mise en oeuvre du procédé de surveillance du confinement tel que décrit précédemment.

Selon l'invention, ce dispositif comprend :
- un conduit de diamètre D destiné à être monté sur un orifice d'une paroi de ladite enceinte, ledit conduit comportant un clapet anti-retour qui obture ledit conduit pour interdire le passage d'un flux gazeux depuis l'intérieur de l'enceinte vers le milieu extérieur lorsque ladite enceinte est en dépression par rapport au milieu extérieur, ou depuis le milieu extérieur vers le volume intérieur de ladite enceinte lorsque ladite enceinte est en surpression par rapport au milieu extérieur, et
- un moyen de mesure de la vitesse du flux gazeux se déplaçant dans ledit conduit.

Par exemple, ce moyen de mesure de vitesse est un anémomètre à fil chaud ou un anémomètre à hélice.

L'anémomètre étant un anémomètre à fil chaud, cet anémomètre est avantageusement placé à une distance d'au moins cinq (5) x D des extrémités dudit conduit de manière à garantir une mesure la plus fiable possible.

De préférence, le dispositif comprend de plus une alarme sonore et/ou lumineuse pour émettre au moins un signal d'alarme lorsque la vitesse (V) mesurée par le moyen de mesure de vitesse est inférieure à une valeur seuil de vitesse telle que la vitesse de référence V_{référence}.

De manière avantageuse, le moyen de mesure de vitesse étant relié à une unité de traitement du signal émis par ce moyen de mesure, cette ou ces alarmes peuvent être reliées à l'unité de traitement et être commandées par cette dernière. Alternativement, l'unité de traitement émet elle-même l'alarme.

L'invention concerne encore une enceinte comportant au moins un volume intérieur délimité par des parois et au moins un dispositif de mise en dépression ou en surpression de ce volume intérieur de ladite enceinte par rapport au milieu extérieur dans lequel elle est placée.

Selon l'invention, cette enceinte comporte un dispositif pour la mise en oeuvre du procédé de surveillance du confinement tel que décrit précédemment, ce dispositif étant monté sur un orifice d'une desdites parois de l'enceinte délimitant ledit volume intérieur.

### BREVE DESCRIPTION DES DESSINS

D'autres avantages, buts et caractéristiques particulières de la présente invention ressortiront de la description qui va suivre faite, dans un but explicatif et nullement limitatif, en regard des dessins annexés, dans lesquels :
- la figure 1 représente schématiquement une enceinte de confinement en dépression par rapport au milieu extérieur, de l'art antérieur,
- la Figure 2 montre une enceinte en dépression selon un mode de réalisation particulier de la présente invention, cette enceinte comportant un dispositif de contrôle de l'étanchéité de l'enceinte,

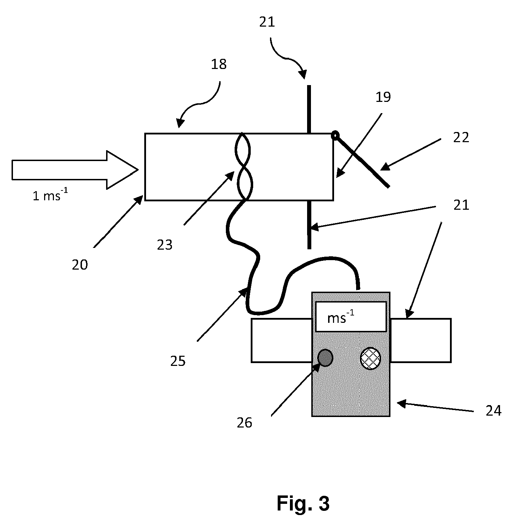

- la Figure 3 représente schématiquement le dispositif de contrôle de l'étanchéité de l'enceinte de la Figure 2.

### DESCRIPTION DETAILLEE DE MODES DE REALISATION DE L'INVENTION

Tout d'abord, on note que les figures ne sont pas à l'échelle.

La Figure 2 montre une enceinte 10 qui est en dépression par rapport au milieu extérieur selon un mode de réalisation préféré de la présente invention.

Cette enceinte 10 comporte une structure métallique recouverte de nappes en vinyle délimitant un premier sas 11 pour la circulation du ou des opérateurs et un deuxième sas 12 destiné à recevoir et permettre l'évacuation du gros oeuvre résultant de l'assainissement et/ou du démantèlement d'élément, d'équipement ou d'installation contaminés. Les premier et deuxième sas 11, 12 sont distincts l'un de l'autre et ne communiquent pas entre eux.

A titre d'exemple uniquement, le volume du premier sas 11 est de 5 m³ tandis que le volume du deuxième sas 12 est de 15 m³.

Ces parois en vinyle délimitent également un troisième sas 13, appelé sas d'intervention et ayant un volume plus important que les deux autres, par exemple 40 m³.

Bien entendu, une enceinte 10 peut présenter des volumes variés en fonction des dimensions des éléments, équipements ou installations contaminés à traiter.

C'est dans ce sas d'intervention 13 que sont réalisées les opérations d'assainissement et/ou de démantèlement proprement dites.

Ce troisième sas 13 comprend une installation d'extraction de l'air assurant la mise en dépression de l'enceinte par rapport au milieu extérieur dans lequel est placée cette enceinte. Ce milieu extérieur est ici le hall d'un bâtiment abritant l'enceinte 10.

Avantageusement, cette installation d'extraction de l'air aspirant l'air dans le troisième volume 13 comprend un dispositif d'extraction 14 tel qu'un ventilateur, dont le débit d'extraction est réglable. L'installation comporte également un circuit d'évacuation 15 auquel est relié le dispositif d'extraction 14 de l'air, ce circuit comportant une installation de filtrage de l'air aspiré.

Avantageusement, ce circuit d'évacuation 15 comporte également un débitmètre 16 pour mesurer précisément le débit Q du dispositif d'extraction. A titre d'exemple, ce débitmètre 16 comporte un anémomètre relié à une unité de calcul pour calculer le débit d'extraction à partir de la vitesse d'extraction mesurée par l'anémomètre. Alternativement, une sonde de Pitot conviendrait également pour mesurer la vitesse d'extraction.

Une des parois 17 de ce troisième volume comporte une ouverture recevant un conduit 18. Une première extrémité 19 de ce conduit débouche à l'intérieur du troisième sas 13 de l'enceinte tandis que son autre extrémité 20 débouche à l'extérieur de cette enceinte.

Ce conduit 18 établit donc une communication de fluide entre le milieu extérieur à l'enceinte et le volume intérieur de cette enceinte. L'enceinte étant en dépression par rapport au milieu extérieur, un flux d'air entrant est généré dans ce conduit 18.

Ce conduit 18 qui a dans le mode de réalisation considéré, un diamètre de 100 mm, est de préférence réalisé dans une matière plastique rigide telle que le chlorure de polyvinyle (PVC), en étant assemblé de manière étanche avec la paroi 17 en vinyle du troisième sas. Avantageusement, le conduit 18 est léger pour ne pas fragiliser la paroi 17 en vinyle sur laquelle il est monté.

De préférence, la fixation de ce conduit 18 sur la paroi de l'enceinte, est réalisée au moyen de pattes de fixation 21, l'étanchéité de l'assemblage étant ici réalisée par collage par exemple en utilisant un ruban adhésif.

L'extrémité 19 du conduit débouchant à l'intérieur de l'enceinte comporte de préférence un clapet anti-retour 22 autorisant le passage de l'air du milieu extérieur vers l'intérieur de l'enceinte 10 mais bloquant la circulation de l'air dans l'autre sens pour empêcher tout risque de contamination à l'extérieur de l'enceinte.

Dans ce conduit 18 est placé un anémomètre 23 à hélice permettant de mesurer en continu la vitesse du flux d'air entrant. Avantageusement, l'axe de rotation de l'hélice est maintenu parallèlement, ou sensiblement parallèlement, à l'axe d'écoulement du flux d'air entrant circulant dans le conduit 18.

L'ensemble est relié à une unité 24 de traitement du signal émis par l'anémomètre 23 tel qu'un boitier électronique, par un élément de liaison 25 tel qu'un câble.

Le boitier électronique permet la lecture de la vitesse mesurée et supporte l'alarme visuelle et/ou sonore 26 retentissant lorsque la vitesse mesurée est inférieure à une vitesse de consigne V_{référence} prise égale ici à 1 ms⁻¹ à titre d'exemple.

Ainsi, pour obtenir l'enceinte de confinement 10 telle que décrite précédemment pour un chantier de démantèlement et/ou d'assainissement, on aura réalisé les étapes suivantes :
- réaliser un orifice de diamètre calibré égal à 100 mm, également à titre d'exemple, sur une paroi de cette enceinte,
- régler le débit d'extraction de l'enceinte de façon à obtenir une vitesse au moins égale à 1 ms⁻¹ mesurée au droit de l'orifice calibré à l'aide de l'anémomètre à hélice, cette vitesse de 1 ms⁻¹ étant appelée V_{référence},
- mesurer le débit d'extraction de l'enceinte pour cette vitesse et la perte de charge de la filtration avec la perte de charge du registre de compensation de colmatage (point de consigne de la filtration).

De manière plus générale, on aura déterminé au préalable en fonction des dimensions de l'orifice et de l'enceinte en dépression, la valeur V_{référence} de la vitesse de référence du flux gazeux entrant ou sortant servant au déclenchement de l'alarme.

Pour cela et dans un mode de mise en oeuvre particulier de l'invention, on introduit un gaz traceur dans l'enceinte. Ce gaz traceur est de préférence un gaz inerte tel que l'hexafluorure de soufre (SF₆) ou l'Hélium (He). Le principal intérêt de ces gaz traceurs réside dans leur très grande inertie chimique même à haute température ainsi que dans leurs propriétés d'être détectables en continu et en temps réel, par spectrométrie de masse pour l'Hélium et par analyse infrarouge pour le SF₆.

Ce gaz traceur est balayé dans l'enceinte, par exemple au moyen d'un ventilateur rapporté et placé au centre du troisième sas 13.

On détecte et mesure la concentration de ce gaz traceur à l'extérieur de l'enceinte 10 à l'aide d'un ou plusieurs appareils analyseur pour différentes valeurs de vitesse du flux gazeux tel que de l'air, entrant ou sortant au travers de l'orifice de diamètre fixé et dans différentes conditions de service de cette enceinte.

On compare les données ainsi obtenues et on retient la plus petite de ces valeurs de vitesse pour laquelle la concentration du gaz traceur détectée à l'extérieur de l'enceinte 10 dans les différentes conditions de service envisagées est inférieure ou égale à une valeur seuil. Cette valeur seuil correspond ici à un transfert négligeable vers l'extérieur du gaz traceur.

A titre purement illustratif, les différentes conditions de service peuvent être simulées par des scénarii d'entrée / sortie du sas d'intervention tels que ceux décrits ci-après :
- Scénario 1 : entrée d'un opérateur dans le sas d'entrée/sortie du personnel 11 puis dans le sas d'intervention 13. Sortie du sas d'intervention 13 par le sas d'entrée/sortie du personnel 11, temps d'attente d'une minute pour simuler le temps de déshabillage de l'opérateur, puis sortie vers l'extérieur de l'enceinte 10;
- Scénario 2 : comme le scénario 1 mais en version « dégradée ». L'opérateur n'attend pas une minute dans le sas personnel et sort directement à l'extérieur ;
- Scénario 3 : simulation d'entrée de matériel dans le sas matériel 12 sans matériel, sortie de l'opérateur, entrée de l'opérateur dans le sas d'entrée/sortie du personnel 11 puis dans le sas d'intervention 13. Simulation de récupération de matériel dans le sas matériel 12, sortie du sas d'intervention par le sas d'entrée/sortie du personnel 11, temps d'attente d'une minute pour simuler le temps de déshabillage de l'opérateur, puis sortie vers l'extérieur de l'enceinte 10;
- Scénario 4 : entrée / sortie de matériel en version « dégradée » sans passer par le sas d'entrée/sortie du personnel 11, ni marquer un temps d'attente d'une minute ;
- Scénario 3' : comme le scénario 3 mais avec un dispositif de transport de matériel tel qu'un roule-pratique ;
- Scénario 4' : comme le scénario 4 mais avec un roule-pratique ;
- Scénario 5 : comme le scénario 1 mais par le sas matériel ;
- Scénario 6 : pas de simulation de passages d'opérateur mais portes en vinyle entre les sas d'entrée/sortie du personnel 11 et matériel 12 et l'extérieur ouvertes, puis, dans un second temps, ouverture de la porte en vinyle entre le sas d'intervention 13 et le sas matériel 12.

Il est à noter que les scénarii 1 et 3 sont les scénarii usuellement appliqués en zone contrôlée.

L'intérêt de réaliser les scénarii 2, 4, 5 et 6 est de tester d'autres cas *a priori* plus pénalisants susceptibles de se produire en utilisation.

## Revendications

1. Procédé de surveillance du confinement d'une enceinte, ladite enceinte (10) comportant des parois délimitant un volume intérieur et un milieu extérieur à ladite enceinte, selon lequel on entretient de manière continue une pression différentielle ΔP entre le volume intérieur de l'enceinte et ledit milieu extérieur, **caractérisé en ce que**
- l'enceinte comportant un orifice (18) dans une de ses parois établissant une communication de fluide entre ledit volume intérieur et ledit milieu extérieur, ledit orifice (18) est traversé par un flux gazeux ayant une vitesse V au moins égale à une vitesse de référence V_{réf}, sous l'effet de ladite pression différentielle ΔP procédé selon lequel on réalise les étapes suivantes:
- mesurer à des intervalles de temps prédéterminés ou en continu la vitesse V dudit flux gazeux, et comparer cette mesure de vitesse V avec la vitesse de référence V_{réf}
- lorsque la mesure de vitesse V est inférieure à la vitesse de référence R_{éférence,} émettre au moins un signal d'alarme.

2. Procédé selon la revendication 1, **caractérisé en ce que** ladite pression différentielle ΔP entre le volume intérieur de l'enceinte et ledit milieu extérieur est établie par au moins un système de ventilation.

3. Procédé selon la revendication 2, **caractérisé en ce qu'**ayant déterminé un débit de ventilation de référence Q_{réf} de ladite enceinte (10) par ledit au moins un système de ventilation, on réalise les étapes suivantes :
- mesurer le débit de ventilation Q de ladite enceinte (10),
- comparer la mesure de débit de ventilation Q ainsi obtenue avec le débit de référence Q_{réf} pour déterminer si le débit de ventilation a baissé, et
- éventuellement ajuster le débit de ventilation Q pour générer un flux gazeux traversant ledit orifice avec une vitesse au moins égale à ladite vitesse de référence V_{réf}

4. Procédé selon la revendication 2 ou 3, **caractérisé en ce que** le débit de ventilation Q de ladite enceinte (10) étant égal ou sensiblement égal au débit de référence Q_{réf} on localise la ou les fuites de ladite enceinte (10) et on colmate la ou lesdites fuites.

5. Procédé selon l'une quelconque des revendications 2 à 4, **caractérisé en ce que** ledit au moins un système de ventilation est choisi dans le groupe comprenant : un système d'extraction d'un flux gazeux, un système d'admission d'un flux gazeux, un système réversible apte à commuter entre un mode extraction de flux gazeux et un mode admission de flux gazeux, et des combinaisons de ces éléments.

6. Procédé selon la revendication 1, **caractérisé en ce que** ladite pression différentielle ΔP entre le volume intérieur de l'enceinte et ledit milieu extérieur est établie par au moins une source d'alimentation en flux gazeux ayant un débit d'admission Q.

7. Procédé selon l'une quelconque des revendications 1 à 6, **caractérisé en ce qu'**on effectue au préalable, les étapes suivantes pour déterminer ladite valeur Q_{réf} de la vitesse de référence du flux gazeux :
- introduire un gaz traceur dans ladite enceinte (10),
- détecter et mesurer la concentration dudit gaz traceur à l'extérieur de ladite enceinte (10) à l'aide d'un ou plusieurs appareils analyseur pour différentes valeurs de vitesse du flux gazeux entrant au travers dudit orifice (18) de diamètre fixé et dans différentes conditions de service de ladite enceinte,
- comparer les données ainsi obtenues et retenir la plus petite desdites valeurs de vitesse pour laquelle la concentration dudit gaz traceur détectée à l'extérieur de ladite enceinte (10) dans les différentes conditions de service envisagées, est inférieure ou égale à une valeur seuil.

8. Procédé selon l'une quelconque des revendications 1 à 7, **caractérisé en ce que** ledit flux gazeux entrant est de l'air ou un gaz neutre.

9. Procédé selon l'une quelconque des revendications 1 à 8, **caractérisé en ce que** ladite vitesse de référence V_{réf} est au moins égale à 1 m.s⁻¹.

10. Procédé selon la revendication 9, **caractérisé en ce que** ladite vitesse de référence V_{réf} est strictement égale à 1 m.s⁻¹.

11. Dispositif pour la mise en oeuvre du procédé de surveillance du confinement d'une enceinte selon l'une quelconque des revendications 1 à 10, **caractérisé en ce qu'**il comprend au moins :
- un conduit de diamètre D (18) destiné à être monté sur un orifice d'une paroi de ladite enceinte (10), ledit conduit comportant un clapet anti-retour (22) qui obture ledit conduit (18) pour interdire le passage d'un flux gazeux depuis l'intérieur de l'enceinte (10) vers le milieu extérieur lorsque ladite enceinte est en dépression par rapport au milieu extérieur, ou depuis le milieu extérieur vers le volume intérieur de ladite enceinte lorsque ladite enceinte est en surpression par rapport au milieu extérieur, et
- un moyen (23) de mesure de vitesse du flux gazeux se déplaçant dans ledit conduit.

12. Dispositif selon la revendication 11, **caractérisé en ce que** ledit moyen (23) de mesure de vitesse est un anémomètre.

13. Dispositif selon la revendication 11 ou 12, **caractérisé en ce qu'**il comprend de plus une alarme sonore et/ou lumineuse (26) pour émettre au moins un signal d'alarme lorsque la vitesse V mesurée par le moyen (23) de mesure de vitesse est inférieure à une valeur seuil de vitesse.

14. Enceinte de confinement comportant au moins un volume intérieur délimité par des parois et au moins un dispositif de mise en dépression, ou en surpression, de ce volume intérieur de ladite enceinte par rapport au milieu extérieur dans lequel ladite enceinte est placée, **caractérisée en ce qu'**elle comporte un dispositif pour la mise en oeuvre du procédé de surveillance selon l'une quelconque des revendications 11 à 13, ce dispositif étant monté sur un orifice d'une desdites parois de l'enceinte délimitant ledit volume intérieur.

15. Enceinte selon la revendication 14, **caractérisée en ce qu'**elle comporte un débitmètre pour mesurer le débit d'extraction dudit dispositif de mise en dépression, ou le débit d'admission dudit dispositif de mise en surpression, ce débitmètre comportant un anémomètre ou une sonde de Pitot pour mesurer la vitesse d'extraction, respectivement d'admission, ledit anémomètre ou ladite sonde de Pitot étant relié à une unité de calcul pour calculer le débit d'extraction, respectivement d'admission, à partir de la vitesse d'extraction, respectivement d'admission, ainsi mesurée.

## Patentansprüche

1. Verfahren zur Überwachung der Sicherheitshülle eines Behälters, wobei der Behälter (10) Wände aufweist, die ein Innenvolumen und eine Umgebung außerhalb des Behälters begrenzen, gemäß dem kontinuierlich ein Differenzdruck ΔP zwischen dem Innenvolumen des Behälters und der Außenumgebung aufrecht erhalten wird, **dadurch gekennzeichnet, dass**
- da der Behälter eine Öffnung (18) in einer seiner Wände aufweist, die eine Fluidverbindung zwischen dem Innenvolumen und der Außenumgebung aufbaut, die Öffnung (18) von einem Gasstrom durchquert wird, der eine Geschwindigkeit V mindestens gleich einer Bezugsgeschwindigkeit V_{ref} unter der Wirkung des Differenzdrucks ΔP hat,
Verfahren, gemäß dem die folgenden Schritte durchgeführt werden:
- Messen der Geschwindigkeit V des Gasstroms in vorbestimmten Zeitintervallen oder kontinuierlich, und Vergleich dieses Geschwindigkeitsmesswerts V mit der Bezugsgeschwindigkeit V_{réf},
- wenn der Geschwindigkeitsmesswert V niedriger als die Bezugsgeschwindigkeit V_{reference} ist, Senden mindestens eines Alarmsignals.

2. Verfahren nach Anspruch 1, **dadurch gekennzeichnet, dass** der Differenzdruck ΔP zwischen dem Innenvolumen des Behälters und der Außenumgebung von mindestens einem Lüftungssystem aufgebaut wird.

3. Verfahren nach Anspruch 2, **dadurch gekennzeichnet, dass**, nachdem ein Bezugslüfturgsdurchsatz Q_{réf} des Behälters (10) durch das mindestens eine Lüftungssystem festgelegt wurde, die folgenden Schritte durchgeführt werden:
- Messen des Lüftungsdurchsatzes Q des Behälters (10),
- Vergleich des so erhaltenen Lüftungsdurchsatz-Messwerts Q mit dem Bezugsdurchsatz Q_{réf}, um festzustellen, ob der Lüftungsdurchsatz abgenommen hat, und
- ggf. Anpassen des Lüftungsdurchsatzes Q, um einen Gasstrom zu erzeugen, der die Öffnung mit einer Geschwindigkeit durchquert, die mindestens gleich der Bezugsgeschwindigkeit V_{réf} ist.

4. Verfahren nach Anspruch 2 oder 3, **dadurch gekennzeichnet, dass**, wenn der Lüftungsdurchsatz Q des Behälters (10) gleich oder im Wesentlichen gleich dem Bezugsdurchsatz Q_{réf} ist, das oder die Lecks des Behälters (10) lokalisiert und das oder die Lecks abgedichtet werden.

5. Verfahren nach einem der Ansprüche 2 bis 4, **dadurch gekennzeichnet, dass** das mindestens eine Lüftungssystem aus der Gruppe ausgewählt wird, die enthält: ein Abzugsystem eines Gasstroms, ein Ansaugsystem eines Gasstroms, ein umkehrbares System, das zwischen einer Betriebsart des Abzugs eines Gasstroms und einer Betriebsart des Ansaugens eines Gasstroms umschalten kann, und Kombinationen dieser Elemente.

6. Verfahren nach Anspruch 1, **dadurch gekennzeichnet, dass** der Differenzdruck ΔP zwischen dem Innenvolumen des Behälters und der Außenumgebung durch mindestens eine Gasstrom-Versorgungsquelle aufgebaut wird, die einen Ansaugdurchsatz Q hat.

7. Verfahren nach einem der Ansprüche 1 bis 6, **dadurch gekennzeichnet, dass** vorab die folgenden Schritte ausgeführt werden, um den Wert V_{réf} der Bezugsgeschwindigkeit des Gasstroms festzulegen:
- Einführen eines Spürgases in den Behälter (10),
- Erfassen und Messen der Konzentration des Spürgases außerhalb des Behälters (10) mit Hilfe eines oder mehrerer Analysegeräte für verschiedene Geschwindigkeitswerte des durch die Öffnung (18) mit festgelegtem Durchmesser eintretenden Gasstroms und unter verschiedenen Betriebsbedingungen des Behälters,
- Vergleichen der so erhaltenen Daten und Behalten des kleinsten der Geschwindigkeitswerte, für den die erfasste Konzentration des außerhalb des Behälters (10) unter den verschiedenen in Betracht gezogenen Betriebsbedingungen erfassten Spürgases niedriger als ein oder gleich einem Schwellwert ist.

8. Verfahren nach einem der Ansprüche 1 bis 7, **dadurch gekennzeichnet, dass** der eintretende Gasstrom Luft oder ein Schutzgas ist.

9. Verfahren nach einem der Ansprüche 1 bis 8, **dadurch gekennzeichnet, dass** die Bezugsgeschwindigkeit V_{ref} mindestens gleich 1 m.s⁻¹ ist.

10. Verfahren nach Anspruch 9, **dadurch gekennzeichnet, dass** die Bezugsgeschwindigkeit V_{réf} strikt gleich 1 m.s⁻¹ ist.

11. Vorrichtung zur Durchführung des Verfahrens zur Überwachung der Sicherheitshülle eines Behälters nach einem der Ansprüche 1 bis 10, **dadurch gekennzeichnet, dass** sie mindestens enthält:
- ein Leitungsrohr mit einem Durchmesser D (18), das dazu bestimmt ist, auf eine Öffnung einer Wand des Behälters (10) montiert zu werden, wobei das Leitungsrohr ein Rückschlagventil (22) aufweiset, das das Leitungsrohr (18) verschließt, um den Durchgang eines Gasstroms von innerhalb des Behälters (10) in die Außenumgebung, wenn der Behälter bezüglich der Außenumgebung auf Unterdruck ist, oder von der Außenumgebung zum Innenvolumen des Behälters, wenn der Behälter bezüglich der Außenumgebung auf Überdruck ist, zu verhindern, und
- eine Einrichtung (23) zur Geschwindigkeitsmessung des Gasstroms, der sich im Leitungsrohr bewegt.

12. Vorrichtung nach Anspruch 11, **dadurch gekennzeichnet, dass** die Einrichtung (23) zur Geschwindigkeitsmessung ein Anemometer ist.

13. Vorrichtung nach Anspruch 11 oder 12, **dadurch gekennzeichnet, dass** sie außerdem einen akustischen und/oder Leuchtalarm (26) enthält, um mindestens ein Alarmsignal zu senden, wenn die von der Geschwindigkeitsmesseinrichtung (23) gemessene Geschwindigkeit V niedriger als ein Geschwindigkeitsschwellwert ist.

14. Sicherheitsbehälter, der mindestens ein von Wänden begrenztes Innenvolumen und mindestens eine Einrichtung zum Erzeugen von Unterdruck oder Überdruck in diesem Innenvolumen des Behälters bezüglich der Außenumgebung aufweist, in der der Behälter platziert ist, **dadurch gekennzeichnet, dass** er eine Vorrichtung zur Durchführung des Überwachungsverfahrens nach einem der Ansprüche 11 bis 13 aufweist, wobei diese Vorrichtung auf eine Öffnung einer der Wände des Behälters montiert ist, die das Innenvolumen begrenzen.

15. Behälter nach Anspruch 14, **dadurch gekennzeichnet, dass** er einen Durchsatzmesser aufweist, um den Abzugdurchsatz der Vorrichtung zum Erzeugen eines Unterdrucks oder den Ansaugdurchsatz der Vorrichtung zum Erzeugen eines Überdrucks zu messen, wobei dieser Durchsatzmesser ein Anemometer oder eine Pitot-Sonde aufweist, um die Abzuggeschwindigkeit bzw. die Ansauggeschwindigkeit zu messen, wobei das Anemometer oder die Pitot-Sonde mit einer Recheneinheit verbunden ist, um den Abzug- bzw. Ansaugdurchsatz ausgehend von der so gemessenen Abzug- bzw. Ansauggeschwindigkeit zu berechnen.

## Claims

1. Method for monitoring the confinement of an enclosure, said enclosure (10) comprising walls delimiting an interior volume and exterior surroundings outside said enclosure, whereby a differential pressure ΔP is continuously maintained between the interior volume of the enclosure and said exterior surroundings, **characterized in that**
- with the enclosure comprising an orifice (18) in one of its walls establishing fluidic communication between said interior volume and said exterior surroundings, said orifice (18) has passing through it a flow of gas at a speed V at least equal to a reference speed V_{ref}, under the effect of said differential pressure ΔP, according to which method the following steps are carried out:
- the speed V of said gas flow is measured at predetermined time intervals or continuously and this speed measurement V is compared with the reference speed V_{ref},
- when the speed measurement V is lower than the reference speed V_{reference}, at least one alarm signal is emitted.

2. Method according to Claim 1, **characterized in that** said differential pressure ΔP between the interior volume of the enclosure and said exterior surroundings is established by at least one ventilation system.

3. Method according to Claim 2, **characterized in that**, having determined a reference flow rate Q_{ref} at which said enclosure (10) is ventilated by said at least one ventilation system, the following steps are carried out:
- the flow rate Q at which said enclosure (10) is ventilated is measured,
- the ventilation flow rate measurement Q thus obtained is compared with the reference flow rate Q_{ref} to determine whether the ventilation flow rate has dropped, and
- if appropriate, the ventilation flow rate Q is adjusted to generate a gas flow passing through said orifice at a speed at least equal to said reference speed V_{ref}.

4. Method according to Claim 2 or 3, **characterized in that**, with the ventilation flow rate Q of said enclosure (10) being equal or substantially equal to the reference flow rate Q_{ref}, the leak or leaks in said enclosure (10) is or are located and said leak or leaks is or are plugged.

5. Method according to any one of Claims 2 to 4, **characterized in that** said at least one ventilation system is chosen from the group comprising: a gas flow extraction system, a gas flow inlet system, a reversible system capable of switching between a gas flow extraction mode and a gas flow inlet mode and combinations of these elements.

6. Method according to Claim 1, **characterized in that** said differential pressure ΔP between the interior volume of the enclosure and said exterior surroundings is established by at least one gas flow supply source that has an inlet flow rate Q.

7. Method according to any one of Claims 1 to 6, **characterized in that** the following steps are performed beforehand in order to determine said value V_{ref} for the reference speed of the gas flow:
- a tracer gas is introduced intro said enclosure (10),
- the presence and concentration of said tracer gas outside said enclosure (10) are detected and measured using one or more pieces of analysis equipment for various values for the speed of the gas flow entering through said fixed-diameter orifice (18) and under various operating conditions of said enclosure,
- the data thus obtained are compared and the smallest of said speed values for which the detected concentration of said tracer gas outside said enclosure (10) under the various envisioned operating conditions is below or equal to a threshold value is retained.

8. Method according to any one of Claims 1 to 7, **characterized in that** said incoming gas flow is air or neutral gas.

9. Method according to any one of Claims 1 to 8, **characterized in that** said reference speed V_{ref} is at least equal to 1 m.s⁻¹.

10. Method according to Claim 9, **characterized in that** said reference speed V_{ref} is strictly equal to 1 m.s⁻¹.

11. Device for implementing the method for monitoring the confinement of an enclosure according to any one of Claims 1 to 10, **characterized in that** it comprises at least:
- a pipe of diameter D (18) intended to be mounted on an orifice of a wall of said enclosure (10), said pipe comprising a nonreturn valve (22) which closes off said pipe (18) to prevent the passage of a flow of gas from inside the enclosure (10) toward the exterior surroundings when said enclosure is at a reduced pressure with respect to the exterior surroundings, or from the exterior surroundings toward the interior volume of said enclosure when said enclosure is at a raised pressure with respect to the exterior surroundings, and
- a means (23) of measuring the speed of the gas flow passing along said pipe.

12. Device according to Claim 11, **characterized in that** said means (23) of measuring speed is an anemometer.

13. Device according to Claim 11 or 12, **characterized in that** it additionally comprises an audible and/or luminous alarm (26) for remitting at least one alarm signal when the speed V measured by the speed measuring means (23) is below a threshold speed value.

14. Confinement enclosure comprising at least one interior volume delimited by walls and at least one device for placing this interior volume of said enclosure at a reduced pressure or at a raised pressure in relation to the exterior surroundings in which said enclosure is placed, **characterized in that** it comprises a device for implementing the monitoring method according to any one of Claims 11 to 13, this device being mounted on an orifice of one of said walls of the enclosure delimiting said interior volume.

15. Enclosure according to Claim 14, **characterized in that** it comprises a flow meter for measuring the extraction flow rate of said device for creating the reduced pressure, or the inlet flow rate of said device for creating a raised pressure, this flow meter comprising an anemometer or a Pitot tube for measuring the extraction or admission speed respectively, said anemometer or said Pitot tube being connected to a processing unit for calculating the extraction or admission flow rate from the extraction or admission speed thus measured, respectively.
